# EUROPEAN PATENT APPLICATION

(11) **EP 4 586 354 A1**
(43) Date of publication of application: **16.07.2025**
(21) Application number: 22968901.3
(22) Date of filing: 21.12.2022
(51) Int. Cl.: H01M 10/0525, H01M 4/04

(54) **CURRENT COLLECTOR, SECONDARY BATTERY, BATTERY MODULE, BATTERY PACK AND ELECTRIC APPARATUS**

(71) Applicant: Contemporary Amperex Technology (Hong Kong) Limited, Central (HK)
(72) Inventor: GUAN, Yingjie, Ningde, Fujian 352100 (CN); QIN, Meng, Ningde, Fujian 352100 (CN); ZHAO, Yuzhen, Ningde, Fujian 352100 (CN); WEN, Yan, Ningde, Fujian 352100 (CN); HUANG, Qisen, Ningde, Fujian 352100 (CN)
(74) Representative: Laufhütte, Dieter
(86) International application number: PCT/CN2022/140766
(87) International publication number: WO 2024/130600

(57) **Abstract**

This application provides a current collector, a secondary battery, a battery module, a battery pack, and an electric apparatus. A coating is formed on one side of the current collector, and the coating includes an interface protection layer. The interface protection layer is beneficial to reduce a contact area between a metal and an electrolyte solution, thereby reducing the occurrence of side reactions between the metal and the electrolyte solution, and effectively improving the coulombic efficiency and capacity retention rate after 100 cycles of the battery.

## Description

### TECHNICAL FIELD

This application relates to the technical field of secondary batteries, in particular to a current collector, a secondary battery, a battery module, a battery pack, and an electric apparatus.

### BACKGROUND

In recent years, secondary batteries have been widely used in energy storage power supply systems such as hydroelectric power plants, thermal power plants, wind power plants, and solar power plants, and many other fields including electric tools, electric bicycles, electric motorcycles, electric vehicles, military equipment, and aerospace.

Interface stability is an important metric for assessing secondary batteries. Side reactions between a metal and an electrolyte solution can significantly affect the interface stability, leading to a decline in electrochemical performance and safety performance of a battery, so that the battery cannot meet the application requirements of new-generation electrochemical systems.

### SUMMARY

This application has been made in view of the foregoing issues. An objective of this application is to provide a current collector with a coating. The coating is beneficial to reduce contact between a metal deposited on the current collector and an electrolyte solution, thereby reducing side reactions between the metal and the electrolyte solution and improving the coulombic efficiency and cycling performance of the battery.

A first aspect of the application provides a current collector with a coating, where the coating includes at least an interface protection layer, and the coating is formed on at least one side of the current collector.

In the charging and discharging process, metal ions can freely pass through the interface protection layer, depositing on the current collector, or a metal on the current collector deintercalates to pass through the interface protection layer in the form of metal ions. In other words, in the charging and discharging process, the interface protection layer located between the metal phase and an electrolyte solution is beneficial to reduce contact between the metal and the electrolyte solution, thus reducing the occurrence of side reactions between the metal and the electrolyte solution, and effectively improving the coulombic efficiency and cycling capacity retention rate of the battery.

In any embodiment, the coating further includes an induced deposition layer, and the induced deposition layer and the interface protection layer are sequentially arranged in a direction from close to the current collector to away from the current collector.

With the induced deposition layer and the interface protection layer sequentially arranged on one side of the current collector, not only the nucleation overpotential of metal ions can be reduced, inducing uniform deposition of metal ions, thereby regulating the deposition behavior of metal ions and suppressing dendrites, but also the contact between the metal and the electrolyte solution can be reduced, thereby reducing the occurrence of side reactions between the metal and the electrolyte solution and effectively improving the coulombic efficiency and cycling capacity retention rate of the battery. In any embodiment, the induced deposition layer is in direct contact with surface of the current collector.

In any embodiment, the induced deposition layer is in direct contact with surface of the current collector.

In any embodiment, the interface protection layer is in direct contact with surface of the induced deposition layer.

With the induced deposition layer formed on the surface of the current collector and the interface protection layer formed on the surface of the induced deposition layer, not only the nucleation overpotential of metal ions can be reduced, but also the contact between a metal and an electrolyte solution can be reduced, effectively improving the performance of the battery.

In any embodiment, the interface protection layer includes one or more of polyvinylidene fluoride, carboxymethyl cellulose, styrene-propylene-butadiene copolymer, polyacrylic acid, and polyimide, optionally one or more of polyvinylidene fluoride and carboxymethyl cellulose.

With the interface protection layer including one or more of polyvinylidene fluoride, carboxymethyl cellulose, styrene-propylene-butadiene copolymer, polyacrylic acid, and polyimide, it is beneficial to improve the coulombic efficiency and cycling capacity retention rate of the battery. With the interface protection layer including one or more of polyvinylidene fluoride and carboxymethyl cellulose, the nucleation overpotential of metal ions can be greatly reduced, further improving the coulombic efficiency and cycling capacity retention rate of the battery.

In any embodiment, the interface protection layer has a thickness of 15 nm to 1500 nm, optionally 50 nm to 500 nm.

The thickness of the interface protection layer controlled to be 15 nm to 1500 nm is beneficial to improve the coulombic efficiency and cycling capacity retention rate of the battery or reduce the nucleation overpotential of metal ions, providing effective protection while avoiding an increase in internal resistance and a decrease in cycling performance and energy density of the battery caused by excessive thickness. The thickness of the interface protection layer controlled to be 50 nm to 500 nm is beneficial to further improve the coulombic efficiency and cycling capacity retention rate of the battery or reduce the nucleation overpotential of metal ions to a greater extent.

In any embodiment, the induced deposition layer includes a conductive material, the conductive material including a carbon material and/or a metal material.

The induced deposition layer including the conductive material is beneficial to reduce the nucleation overpotential of metal ions and improve the coulombic efficiency and cycling capacity retention rate of the battery.

In any embodiment, the conductive material includes one or more of Super P, carbon nanotubes, hard carbon, two-dimensional graphene, graphene quantum dots, gold, silver, copper, aluminum, iron, and nickel, optionally one or more of Super P, carbon nanotubes, hard carbon, two-dimensional graphene, and graphene quantum dots.

The induced deposition layer including the above materials is beneficial to reduce the nucleation overpotential of metal ions and improve the coulombic efficiency and cycling capacity retention rate of the battery. Compared with the induced deposition layer including a metal material, the induced deposition layer including the carbon material has a lower nucleation overpotential of metal ions and higher coulombic efficiency and cycling capacity retention rate of the battery.

In any embodiment, the induced deposition layer has a thickness of 50 nm to 2000 nm, optionally 200 nm to 1000 nm.

With the thickness of the induced deposition layer controlled to be 50 nm to 2000 nm, a sufficient number of nucleation sites can be provided, which is beneficial to reduce the nucleation overpotential of metal ions, improve the coulombic efficiency and cycling capacity retention rate of the battery, and avoid an increase in side reactions and a decrease in energy density caused by excessive thickness. The thickness of the induced deposition layer controlled to be 200 nm to 1000 nm is beneficial to reduce the nucleation overpotential of metal ions to a greater extent and further improve the coulombic efficiency and cycling capacity retention rate of the battery.

In any embodiment, the induced deposition layer further includes a binder, the binder including one or more selected from polyvinylidene fluoride, carboxymethyl cellulose, styrene-propylene-butadiene copolymer, polyacrylic acid, and sodium alginate.

The binder creates high adhesion between the induced deposition layer and the current collector, preventing detachment of the current collector, and also facilitates the uniform distribution of conductive carbon materials in the induced deposition layer.

In any embodiment, the binder material in the induced deposition layer is at least partially the same as a material of the interface protection layer.

With the binder material in the induced deposition layer controlled to be at least partially the same as the material of the interface protection layer, the compatibility between the interface protection layer and the induced deposition layer is increased, which is beneficial to reduce the nucleation overpotential of metal ions and improve the coulombic efficiency and cycling capacity retention rate of the battery.

In any embodiment, the current collector includes at least one of a metal foil, a metal foam current collector, a metal mesh current collector, a carbon felt current collector, a carbon fiber cloth current collector, a carbon paper current collector, and a composite current collector.

The current collector has good tensile strength and ductility, which is beneficial to the stability and safety of the battery.

A second aspect of the application provides a secondary battery, including an electrolyte solution and a negative electrode plate, where the negative electrode plate includes the current collector in any one of the embodiments.

The secondary battery has excellent cycling performance.

In any embodiment, the secondary battery includes at least one of a lithium battery and a sodium battery.

In any embodiment, the secondary battery is a sodium battery without a negative electrode. The sodium battery without a negative electrode can have a high energy density.

In any embodiment, the electrolyte solution includes an ether solvent, where the ether solvent includes one or more of ethylene glycol dimethyl ether, ethylene glycol diethyl ether, diethylene glycol dimethyl ether, triethylene glycol dimethyl ether, tetraethylene glycol dimethyl ether, 1,3- dioxolane, tetrahydrofuran, methyl tetrahydrofuran, diphenyl ether, and crown ether, optionally one or more of ethylene glycol dimethyl ether, ethylene glycol diethyl ether, and diethylene glycol dimethyl ether.

The electrolyte solution including the above solvents is beneficial to reduce the overpotential of sodium ions and improve the coulombic efficiency and cycling capacity retention rate of the battery. The solvent includes one or more of ethylene glycol dimethyl ether, ethylene glycol diethyl ether, and diethylene glycol dimethyl ether, which is beneficial to further improve the coulombic efficiency and cycling capacity retention rate of the battery.

In any embodiment, the electrolyte solution further includes a sodium borate additive.

The sodium borate additive can react with a metal to generate boron-rich inorganic compounds, thus forming an organic/inorganic composite protection layer with the interface protection layer, which is beneficial to improve the cycling performance of the battery. In addition, if the SEI film is damaged during the battery cycling process, the sodium borate additive can continuously generate boron-rich inorganic compounds to repair the damage to the SEI film, further enhancing the cycling performance of the battery.

In any embodiment, the sodium borate additive contains one or more of sodium difluorooxalatoborate, sodium tetrafluoroborate, sodium bisoxalate borate, and sodium tetraphenylborate, and optionally one or more of sodium difluorooxalatoborate and sodium bisoxalate borate.

The electrolyte solution including the above sodium borate additive is beneficial to improve the coulombic efficiency and cycling capacity retention rate of the battery.

In any embodiment, based on a total mass of the electrolyte solution, a mass percentage of the sodium borate additive is 0.01% to 1.8%, optionally 0.1% to 1.0%.

The mass percentage of the sodium borate additive controlled to be in the range of 0.01% to 1.8% is beneficial to improve the coulombic efficiency and cycling capacity retention rate of the battery. The mass percentage of the sodium borate additive controlled to be in the range of 0.1% to 1.0% can further improve the coulombic efficiency and cycling capacity retention rate of the battery.

A third aspect of the application provides a battery module including the secondary battery according to the second aspect of this application.

A fourth aspect of this application provides a battery pack including the secondary battery according to the second aspect or the battery module according to the third aspect.

A fifth aspect of the application provides an electric apparatus, including at least one of the secondary battery according to the second aspect, the battery module according to the third aspect, and the battery pack according to the fourth aspect.

### BRIEF DESCRIPTION OF DRAWINGS

FIG. 1 is a schematic diagram of a secondary battery according to an embodiment of this application;
FIG. 2 is an exploded view of the secondary battery according to the embodiment of this application in FIG. 1;
FIG. 3 is a schematic diagram of a battery module according to an embodiment of this application;
FIG. 4 is a schematic diagram of a battery pack according to an embodiment of this application;
FIG. 5 is an exploded view of the battery pack according to the embodiment of this application in FIG. 4; and
FIG. 6 is a schematic diagram of an electric apparatus using a secondary battery as a power source according to an embodiment of this application.

Description of reference signs:
1. battery pack; 2. upper box body; 3. lower box body; 4. battery module; 5. secondary battery; 51. housing; 52. electrode assembly; and 53. cover plate.

### DESCRIPTION OF EMBODIMENTS

The following specifically discloses in detail embodiments of the current collector, secondary battery, battery module, battery pack, and electric apparatus of this application, with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combination of real numbers between a and b, where both a and b are real numbers. For example, a value range of "0-5" means that all real numbers in the range of "0-5" are listed herein, and "0-5" is just a short representation of a combination of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, preferably, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": Ais true (or present) and B is false (or not present); A is false (or not present) and B is true (or present); or both A and B are true (or present).

The metal secondary battery is a secondary battery with metal materials (such as lithium, sodium, magnesium, potassium, and other metals) as the negative electrode. The metal material on the negative electrode current collector may be pre-deposited on the surface of the current collector as the negative electrode active material, or in-situ deposited on the surface of the current collector during the charging and discharging process. That is, metal secondary batteries include sodium batteries, lithium batteries, magnesium batteries, potassium batteries, and the like, which have negative electrode active materials, as well as batteries without a negative electrode. The negative electrode plate in the battery without a negative electrode uses a negative electrode current collector without a negative electrode active material. During the first charging and discharging process, metal ions are in-situ deposited on the negative electrode current collector.

Metal batteries currently face various issues. Taking sodium batteries without a negative electrode as an example, during the charging and discharging process, side reactions easily occur between metallic sodium and the electrolyte solution, consuming a large amount of sodium and reducing the coulombic efficiency and cycling performance of the battery.

### [Current collector]

Based on this, the application proposes a current collector with a coating, where the coating includes at least an interface protection layer, and the coating is formed on at least one side of the current collector.

The interface protection layer reduces contact between a metal and an electrolyte solution, thereby reducing side reactions between the metal and the electrolyte solution and achieving protection for the metal. The interface protection layer is located between the current collector and the electrolyte solution, and the interface protection layer can allow metal ions to freely pass through. During the charging process, metal ions pass through the interface protection layer from the electrolyte solution and deposit onto the current collector. During the discharging process, the metal loses electrons, detaching from the current collector in the form of metal ions, and diffuses through the interface protection layer into the electrolyte solution.

In this document, the term "at least one side of the current collector" refers to at least one side of surface of the current collector.

In some embodiments, the interface protection layer is a polymer layer.

In some embodiments, the current collector acts as a negative electrode current collector of a secondary battery.

In some embodiments, the current collector is used as a negative electrode current collector of a battery without a negative electrode, and the interface protection layer is in direct contact with surface of the current collector.

In some embodiments, the current collector serves as a negative electrode current collector of a metal battery, and there is a metal phase between the interface protection layer and the current collector.

The interface protection layer is beneficial to reduce the contact between the metal and the electrolyte solution, thereby reducing the occurrence of side reactions between the metal and the electrolyte solution, and effectively improving the coulombic efficiency and capacity retention rate after 100 cycles of the battery.

In this document, the coulombic efficiency refers to the initial coulombic efficiency, which is mainly used to characterize the ratio of the discharge capacity to the charge capacity in the first cycle of the battery, and can reflect the degree of consumption of metal ions, and it can be tested by any well-known method.

In this document, the capacity retention rate after 100 cycles of the battery is mainly used to characterize the cycling performance of the battery, which can reflect the cycling performance of the battery and can be tested by any well-known method.

In some embodiments, the coating further includes an induced deposition layer, and the induced deposition layer and the interface protection layer are sequentially arranged in a direction from close to the current collector to away from the current collector.

In this document, the induced deposition layer provides a sufficient number of nucleation sites to induce uniform deposition of metals, helping suppress dendrites of the metals.

In some embodiments, there is one or more coatings between the induced deposition layer and the current collector.

In some embodiments, there is a deposition layer between the induced deposition layer and the interface protection layer. The deposition layer may be a metal phase pre-deposited between the current collector and the interface protection layer. The deposition layer can alternatively be a metal phase deposited on the current collector by metal ions passing through the interface protection layer.

The induced deposition layer and the interface protection layer are sequentially arranged on the current collector. This can reduce the nucleation overpotential of metal ions, inducing the uniform deposition of metal ions, thereby regulating the deposition behavior of metal ions and suppressing dendrites. In addition, the contact between a metal and an electrolyte solution can be reduced, thus reducing the occurrence of side reactions between the metal and the electrolyte solution and effectively improving the coulombic efficiency and cycling capacity retention rate of the battery. In this document, the term "nucleation overpotential" refers to the potential required for deposition of metal atoms formed by metal ions gaining electrons at the negative electrode.

In this document, the nucleation overpotential is mainly used to characterize the potential required for deposition of metal ions and can characterize the uniformity of metal ion deposition. It can be tested by any well-known method.

In some embodiments, the induced deposition layer is in direct contact with surface of the current collector.

In some embodiments, the interface protection layer is in direct contact with surface of the induced deposition layer.

With the induced deposition layer formed on the surface of the current collector and the interface protection layer formed on the surface of the induced deposition layer, not only the nucleation overpotential of metal ions can be reduced, but also the contact between a metal and an electrolyte solution can be reduced, effectively improving the performance of the battery.

In some embodiments, the interface protection layer includes one or more of polyvinylidene fluoride, carboxymethyl cellulose, styrene-propylene-butadiene copolymer, polyacrylic acid, and polyimide, optionally one or more of polyvinylidene fluoride and carboxymethyl cellulose.

With the interface protection layer including one or more of polyvinylidene fluoride, carboxymethyl cellulose, styrene-propylene-butadiene copolymer, polyacrylic acid, and polyimide, it is beneficial to improve the coulombic efficiency and capacity retention rate after 100 cycles of the battery. With the interface protection layer including one or more of polyvinylidene fluoride and carboxymethyl cellulose, the nucleation overpotential of metal ions can be greatly reduced, further improving the coulombic efficiency and capacity retention rate after 100 cycles of the battery.

In some embodiments, the interface protection layer has a thickness of 15 nm to 1500 nm, optionally 50 nm to 500 nm. In some embodiments, optionally, the interface protection layer has a thickness of 15 nm, 20 nm, 30 nm, 40 nm, 50 nm, 60 nm, 70 nm, 80 nm, 90 nm, 100 nm, 200 nm, 300 nm, 400 nm, 500 nm, 600 nm, 700 nm, 800 nm, 900 nm, 1000 nm, 1100 nm, 1200 nm, 1300 nm, 1400 nm, or 15000 nm.

With the thickness of the interface protection layer controlled to be within 15 nm to 1500 nm, it is beneficial to improve the coulombic efficiency and capacity retention rate after 100 cycles of the battery or reduce the nucleation overpotential of metal ions, providing effective protection, while avoiding an increase in internal resistance, a decrease in battery cycling performance, and a decrease in energy density caused by excessive thickness. With the thickness of the interface protection layer controlled to be within 50 nm to 500 nm, it is beneficial to further improve the coulombic efficiency and capacity retention rate after 100 cycles of the battery or to reduce the nucleation overpotential of metal ions to a greater extent.

In some embodiments, the induced deposition layer includes a conductive material, the conductive material including a carbon material and/or a metal material.

In this document, the term "carbon material" refers to a material containing carbon. As an example, a carbon material includes but is not limited to Super P, carbon nanotubes, hard carbon, two-dimensional graphene, or graphene quantum dots.

In some embodiments, the conductive material includes a carbon material.

In some embodiments, the conductive material includes a metallic material.

In some embodiments, the conductive material includes a carbon material and a metal material.

The induced deposition layer including the conductive material is beneficial to reduce the occurrence of excessive local current density through good conductivity, reduce the nucleation overpotential of metal ions, and improve the coulombic efficiency and capacity retention rate after 100 cycles of the battery.

In some embodiments, the carbon material includes a carbon nanomaterial.

In this document, the term "carbon nano-material" refers to a carbon material in which at least one dimension in three-dimensional space is in the nanometer scale (1 nm to 100 nm) or a material composed of them as basic units, which is approximately equivalent to the scale of 10 to 1000 atoms arranged closely together.

Carbon nano-materials are easy to induce deposition of metal ions on the surface of the undercoating through adsorption, and their nano-scale structure and arrangement improve the uniformity of nucleation site distribution, which is conducive to the further uniform deposition of metal ions.

In some embodiments, the conductive material includes one or more of Super P, carbon nanotubes, hard carbon, two-dimensional graphene, graphene quantum dots, gold, silver, copper, aluminum, iron, and nickel, optionally one or more of Super P, carbon nanotubes, hard carbon, two-dimensional graphene, and graphene quantum dots.

In this document, the term "Super P" refers to the carbon black of a grape-like structure through aggregation of particles.

In this document, the term "carbon nanotubes" refers to a seamless hollow cylinder formed by rolling single or multi-layer graphene, with a pipe diameter of less than 100 nm and a pipe length of more than 100 nm. As an example, the carbon nanotubes include, but are not limited to, single-walled carbon nanotubes and/or multi-walled carbon nanotubes.

In this document, the term "hard carbon" refers to carbon that is difficult to graphitize.

In some embodiments, two-dimensional graphene refers to graphene with a sheet-like structure whose size is nanometer (less than 100 nm) in the thickness direction and exceeds 100 nm in other directions. The graphene may include a single - layer graphene and/or multi-layer graphene.

In this document, the term "single-layer graphene" is a single-layer sheet structure composed of carbon atoms arranged in a hexagonal honeycomb structure periodically and closely. As an example, the single-layer graphene has a thickness of only 0.3 nm to 0.4 nm.

In this document, the term "multi-layer graphene" is prepared by stacking 2 to 10 layers of single-layer graphene, with a total thickness less than 100 nm.

In this document, the term "graphene quantum dots" refers to graphene nanoparticles with graphene size within 100 nm in all dimensions.

With the induced deposition layer including the above materials, it is beneficial to reduce the nucleation overpotential of metal ions and improve the coulombic efficiency and cycling capacity retention rate of the battery. Compared with the induced deposition layer including a metal material, the induced deposition layer including the carbon material has a lower nucleation overpotential of metal ions and higher coulombic efficiency and cycling capacity retention rate of the battery.

In some embodiments, the induced deposition layer has a thickness of 50 nm to 2000 nm, optionally 200 nm to 1000 nm. In some embodiments, optionally, the induced deposition layer has the thickness of 50 nm, 100 nm, 200 nm, 300 nm, 400 nm, 500 nm, 600 nm, 700 nm, 800 nm, 900 nm, 1000 nm, 1100 nm, 1200 nm, 1300 nm, 1400 nm, 1500 nm, 1600 nm, 1700 nm, 1800 nm, 1900 nm, or 2000 nm.

With the thickness of the induced deposition layer controlled to be 50 nm to 2000 nm, a sufficient number of nucleation sites can be provided, which is beneficial to reduce the nucleation overpotential of metal ions, improve the coulombic efficiency and cycling capacity retention rate of the battery, and avoid an increase in side reactions and a decrease in energy density caused by excessive thickness. With the thickness of the induced deposition layer controlled to be within 200 nm to 1000 nm, it is beneficial to reduce the nucleation overpotential of metal ions to a greater extent, and further improve the coulombic efficiency and capacity retention rate after 100 cycles of the battery.

In this document, the term "nucleation site" refers to the position where metal ions are deposited as metal atoms on the negative electrode when they receive electrons.

In some embodiments, the induced deposition layer further includes a binder, the binder including one or more selected from polyvinylidene fluoride, carboxymethyl cellulose, styrene-propylene-butadiene copolymer, polyacrylic acid, and sodium alginate.

The binder creates high adhesion between the induced deposition layer and the current collector, preventing detachment of the current collector, and also facilitates the uniform distribution of conductive carbon materials in the induced deposition layer.

In some embodiments, the binder material in the induced deposition layer is at least partially the same as a material of the interface protection layer.

In some embodiments, the binder material in the induced deposition layer is exactly the same as a material of the interface protection layer. As an example, the binder includes only carboxymethyl cellulose, and the interface protection layer includes only carboxymethyl cellulose.

In some embodiments, the binder material in the induced deposition layer is partially the same as a material of the interface protection layer. As an example, the binder includes a mixture of carboxymethyl cellulose and styrene-propylene-butadiene copolymer, and the interface protection layer includes only carboxymethyl cellulose.

With the binder material in the induced deposition layer controlled to be at least partially the same as the material of the interface protection layer, the compatibility between the interface protection layer and the induced deposition layer is increased, which is beneficial to reduce the nucleation overpotential of metal ions and improve the coulombic efficiency and capacity retention rate after 100 cycles of the battery.

In some embodiments, the current collector includes at least one of a metal foil, a metal foam current collector, a metal mesh current collector, a carbon felt current collector, a carbon fiber cloth current collector, a carbon paper current collector, and a composite current collector.

In some embodiments, optionally, the metal foil can be copper foil, aluminum foil, stainless steel foil, iron foil, zinc foil, and titanium foil, and the metal foam current collector can be copper foam, aluminum foam, zinc foam, and the like. The metal mesh current collector can be copper mesh or aluminum mesh. The composite current collector includes a polymer film and metal foils formed on both sides of the polymer film. The composite current collector can be a sandwich structure, with the polymer film in the middle and metal foil on both sides. Optionally, the polymer film can be one of polyamide, polyterephthalate, polyimide, polyethylene, polypropylene, polystyrene, polyvinyl chloride, acrylonitrile-butadiene-styrene copolymer, polybutylene terephthalate, poly(p-phenylene terephthalamide), poly(p-phenylene ether), polyoxymethylene, epoxy resin, phenolic resin, polytetrafluoroethylene, polyvinylidene fluoride, silicone rubber, and polycarbonate.

The current collector has good tensile strength and ductility, which is beneficial to the stability and safety of the battery.

### [Positive electrode plate]

The positive electrode plate includes a positive electrode current collector and a positive electrode active material layer formed on at least part of a surface of the positive electrode current collector, where the positive electrode active material layer includes a positive electrode active material, and the positive electrode active material may include at least one of a layered transition metal oxide, a polyanionic compound, and a Prussian blue compound.

The transition metal in the layered transition metal oxide may be at least one of Mn, Fe, Ni, Co, Cr, Cu, Ti, Zn, V, Zr, and Ce. Optionally, the layered transition metal oxide is, for example, NaxMO₂, where m is one or more of Ti, V, Mn, Co, Ni, Fe, Cr, and Cu, and 0 < x ≤ 1.

The polyanionic compound can be a compound with metal ions, transition metal ions, and tetrahedral (YO₄)ₙ- anionic units. Optionally, the metal ions can be one of sodium ions, lithium ions, potassium ions, and zinc ions; the transition metal can be optionally at least one of Mn, Fe, Ni, Co, Cr, Cu, Ti, Zn, V, Zr, and Ce; Y can be optionally at least one of P, S, and Si; n represents the valence state of (YO₄)ⁿ⁻.

The Prussian blue compound can be a compound with sodium ions, transition metal ions, and cyanide ions (CN-). The transition metal may be at least one of Mn, Fe, Ni, Co, Cr, Cu, Ti, Zn, V, Zr, and Ce. The Prussian blue compound is, for example, NaₐMe_{b}Me'_{c}(CN)₆, where Me and Me' are independently at least one of Ni, Cu, Fe, Mn, Co, and Zn, where 0 < a ≤ 2, 0 < b < 1, and 0 < c <1.

The positive electrode active material layer may further include a conductive agent to improve the conductivity of the positive electrode. The conductive agent can be one or more of Super P, acetylene black, carbon black, Ketjen black, carbon dot, carbon nanotube, graphite, graphene, and carbon nanofiber.

The positive electrode active substance layer may further include a binder to firmly bind a positive electrode active substance and an optional conductive agent onto the positive electrode current collector. Optionally, the binder may be at least one of polyvinylidene fluoride (PVDF), polytetrafluoroethylene (PTFE), polyacrylic acid (PAA), polyvinyl alcohol (PVA), ethylene vinyl acetate (EVA), styrene-butadiene rubber (SBR), carboxymethyl cellulose (CMC), sodium alginate (SA), polymethacrylic acid (PMA), and carboxymethyl chitosan (CMCS).

The positive electrode current collector can be a conductive carbon sheet, metal foil, carbon-coated metal foil, porous metal plate, or composite current collector. Optionally, the conductive carbon material of the conductive carbon sheet can be one or more of Super P, carbon black, Ketjen black, carbon dots, carbon nanotubes, graphite, graphene, and carbon nanofibers; the metal materials of the metal foil, carbon-coated metal foil, and porous metal plate are each independently selected from at least one of copper, aluminum, nickel, and stainless steel; and the composite current collector can be a composite current collector formed by combining a polymer film and a metal foil.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Electrolyte]

The electrolyte conducts ions between the positive electrode plate and the negative electrode plate. The electrolyte is not specifically limited to any particular type in this application, and may be selected based on needs. For example, the electrolyte may be in a liquid state, a gel state, or an all-solid state.

In some embodiments, the electrolyte is an electrolyte solution. The electrolyte solution includes an electrolytic salt and a solvent.

In some embodiments, the electrolyte salt can be selected from at least one of sodium hexafluorophosphate, sodium bis(fluorosulfonyl)imide, sodium bis(trifluoromethanesulfonyl)imide, sodium trifluoromethanesulfonate, sodium tetrafluoroborate, sodium dichloroacetate, sodium perchlorate, or sodium chloride.

In some embodiments, the electrolyte solution includes an ester solvent, where the ester solvent includes at least one of ethylene carbonate, propylene carbonate, diethyl carbonate, dimethyl carbonate, methyl ethyl carbonate, propylene carbonate, methyl acetate, ethyl propionate, and fluorinated ethylene carbonate.

In some embodiments, the electrolyte solution includes an ether solvent, where the ether solvent includes one or more of ethylene glycol dimethyl ether, ethylene glycol diethyl ether, diethylene glycol dimethyl ether, triethylene glycol dimethyl ether, tetraethylene glycol dimethyl ether, 1,3- dioxolane, tetrahydrofuran, methyl tetrahydrofuran, diphenyl ether, and crown ether, optionally one or more of ethylene glycol dimethyl ether, ethylene glycol diethyl ether, and diethylene glycol dimethyl ether.

The electrolyte solution including the above ether solvents is beneficial to reduce the overpotential of sodium ions and induce the uniform deposition of metal ions. Moreover, the above solvents have strong reduction resistance, which can promote the formation of a stable solid electrolyte interface (SEI) on the metal surface, weaken side reactions during cycling, and improve the coulombic efficiency and capacity retention rate after 100 cycles of the battery. The solvent includes one or more of ethylene glycol dimethyl ether, ethylene glycol diethyl ether, and diethylene glycol dimethyl ether, which is beneficial to further improve the coulombic efficiency and capacity retention rate after 100 cycles of the battery.

In some embodiments, optionally, the electrolyte solution further includes an additive. For example, the additive may include a negative electrode film-forming additive and a positive electrode film-forming additive, or may include an additive that can improve some performance of the battery, for example, an additive for improving over-charge performance of the battery and an additive for improving high-temperature performance or low-temperature performance of the battery.

In some embodiments, the electrolyte solution further includes a sodium borate additive.

In some embodiments, the sodium borate additive includes an ionic compound, the cation of the ionic compound includes sodium ions, and the anion of the ionic compound includes borate ions and derivatives thereof.

The sodium borate additive can react with a sodium metal to generate boron-rich inorganic compounds, thus forming an organic/inorganic composite protection layer with the interface protection layer, which is beneficial to improve the cycling performance of the battery. In addition, if the SEI film is damaged during the battery cycling process, the sodium borate additive can continuously generate boron-rich inorganic compounds to repair the damage to the SEI film, further enhancing the cycling performance of the battery.

In some embodiments, the sodium borate additive includes one or more of sodium difluorooxalatoborate and sodium bisoxalate borate, optionally sodium difluorooxalatoborate.

The electrolyte solution including the above sodium borate additive is beneficial to improve the coulombic efficiency and capacity retention rate after 100 cycles of the battery. The electrolyte solution including sodium difluorooxalatoborate further improves the coulombic efficiency and capacity retention rate after 100 cycles of the battery.

In some embodiments, based on a total mass of the electrolyte solution, a mass percentage of the sodium borate additive is 0.01% to 1.8%, optionally 0.1% to 1.0%. In some embodiments, optionally, based on a total mess of the electrolyte, the sodium borate additive can have a mass percentage of 0.01%, 0.02%, 0.04%, 0.06%, 0.08%, 0.1%, 0.15%, 0.2%, 0.25%, 0.3%, 0.35%, 0.4%, 0.45%, 0.5%, 0.6%, 0.7%, 0.8%, 0.9%, 1%, 1.2%, 1.4%, 1.6%, or 1.8%.

With the mass percentage of the sodium borate additive controlled to be within 0.01% and 1%, it is beneficial to improve the coulombic efficiency and capacity retention rate after 100 cycles of the battery. With the mass percentage of the sodium borate additive controlled to be within 0.1% to 0.5%, the coulombic efficiency and capacity retention rate after 100 cycles of the battery can be further improved.

### [Separator]

In some embodiments, the secondary battery further includes a separator. The separator is not limited to any particular type in this application, and may be any well-known porous separator with good chemical stability and mechanical stability.

In some embodiments, a material of the separator can be selected from at least one of polyethylene, polypropylene, polyvinylidene fluoride, aramid fiber, polyethylene terephthalate, polytetrafluoroethylene, polyacrylonitrile, polyimide, polyamide, polyester, and natural fiber. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. Material of the soft pack may be plastic, which, for example, may be polypropylene, polybutylene terephthalate, and polybutylene succinate.

### [Secondary battery]

A secondary battery includes an electrolyte solution and a negative electrode plate, where the negative electrode plate includes the current collector in some embodiments.

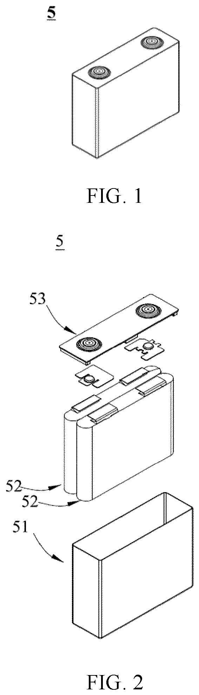

This application does not impose any special limitations on a shape of the secondary battery, and the secondary battery may be cylindrical, rectangular, or of any other shapes. For example, FIG. 2 shows a secondary battery 5 of a rectangular structure as an example.

In some embodiments, the secondary battery further includes a positive electrode plate and a separator.

In some embodiments, the secondary battery includes at least one of a lithium battery and a sodium battery.

In some embodiments, the secondary battery includes at least one of a potassium battery, a magnesium battery, and a zinc battery.

In some embodiments, the secondary battery is a sodium battery without a negative electrode.

The sodium battery without a negative electrode does not include a negative electrode active material, but includes only a negative electrode current collector. During the initial charge, sodium ions receive electrons on the cathode side and deposit as metallic sodium on surface of the current collector to form a sodium metal phase. During discharge, the metallic sodium can be converted back to sodium ions and return to the positive electrode, achieving cyclic charging and discharging. Compared with sodium-ion secondary batteries and sodium metal batteries, sodium batteries without a negative electrode can obtain higher energy density because they are not limited by negative electrode materials.

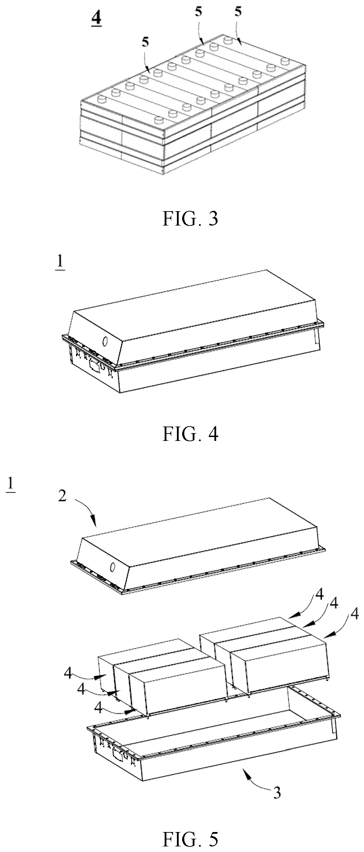

In some embodiments, referring to FIG. 3, the outer package may include a housing 51 and a cover plate 53. The housing 51 may include a base plate and a side plate connected to the base plate, and the base plate and the side plate enclose an accommodating cavity. The housing 51 has an opening communicating with the accommodating cavity, and the cover plate 53 can cover the opening to seal the accommodating cavity. The positive electrode plate, the negative electrode plate, and the separator may be made into an electrode assembly 52 through winding or lamination. The electrode assembly 52 is enclosed in the accommodating cavity. The electrolyte solution infiltrates into the electrode assembly 52. The secondary battery 5 may include one or more electrode assemblies 52, and persons skilled in the art may make choices according to actual requirements.

### [Battery module]

In some embodiments, the secondary battery may be assembled into a battery module, and the battery module may include one or more secondary batteries. The specific quantity may be chosen by persons skilled in the art according to use and capacity of the battery module.

FIG. 4 shows a battery module 4 as an example. Referring to FIG. 4, in the battery module 4, a plurality of secondary batteries 5 may be sequentially arranged along a length direction of the battery module 4. Certainly, the batteries may alternatively be arranged in any other manner. Further, the plurality of secondary batteries 5 may be fastened by using fasteners.

Optionally, the battery module 4 may further include a housing with accommodating space, and the plurality of secondary batteries 5 are accommodated in the accommodating space.

### [Battery pack]

In some embodiments, the battery module may be further assembled into a battery pack, and the battery pack may include one or more battery modules. The specific quantity may be chosen by persons skilled in the art according to use and capacity of the battery pack.

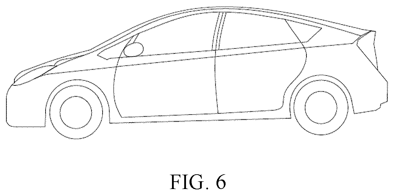

FIG. 5 and FIG. 6 show a battery pack 1 as an example. Refer to FIG. 5 and FIG. 6. The battery pack 1 may include a battery box and a plurality of battery modules 4 arranged in the battery box. The battery box includes an upper box body 2 and a lower box body 3. The upper box body 2 can cover the lower box body 3 to form an enclosed space for accommodating the battery module 4. The plurality of battery modules 4 may be arranged in the battery box in any manner.

### [Electric apparatus]

In an embodiment of this application, an electric apparatus is provided, which includes at least one of the secondary battery in any embodiment, the battery module in any embodiment, or the battery pack in any embodiment.

The electric apparatus includes at least one of a secondary battery, a battery module, or a battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 7 shows an electric apparatus as an example. This electric apparatus is a battery electric vehicle, a hybrid electric vehicle, a plug-in hybrid electric vehicle, or the like. To satisfy a requirement of the electric apparatus for high power and high energy density of the secondary battery, a battery pack or a battery module may be used.

In another example, the apparatus may be a mobile phone, a tablet computer, a notebook computer, or the like. The apparatus usually requires to be light and thin, and a secondary battery may be used as a power source.

### Examples

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

### I. Preparation method

### Example 1

### (1) Preparation of current collector

5 g of carboxymethyl cellulose (CMC) were weighed and fully dissolved in deionized water with stirring to ensure complete dissolution of the carboxymethyl cellulose. Subsequently, the solution was applied onto a surface of a copper foil, and then the copper foil was transferred to a vacuum drying oven for thorough drying, resulting in a current collector with an interface protection layer.

### (2) Preparation of positive electrode plate

10wt% polyvinylidene fluoride binder was fully dissolved in N-methylpyrrolidone (NMP), followed by the addition of 10wt% carbon black conductive agent and 80wt% positive electrode active material Na₄Fe₃(PO₄)₂P₂O₇ (NFPP). A resulting mixture was stirred thoroughly to obtain a positive electrode slurry. Subsequently, the positive electrode slurry was uniformly applied onto a surface of a positive electrode current collector copper foil, followed by drying, cold pressing, and slitting, to obtain a positive electrode plate.

### (3) Separator

A polypropylene film was used as a separator.

### (4) Preparation of electrolyte solution

In a glove box with argon atmosphere (H₂O < 0.1 ppm, O₂ < 0.1 ppm), sodium salt sodium hexafluorophosphate (NaPF₆) was dissolved in the organic solvent of ethylene glycol dimethyl ether (DME) and stirred well, and then sodium difluorooxalatoborate (NaDFOB) additive was added. The concentration of NaPF₆ was 1 mol/L, and based on a total mass of the electrolyte solution, the sodium difluorooxalatoborate had a weight percentage of 0.25%, constituting the electrolyte of Example 1.

### (5) Preparation of full battery

Preparation of a full battery without a negative electrode: A positive electrode plate, a separator, and the current collector were stacked in sequence, with the separator positioned between the positive electrode current collector and the negative electrode current collector for separation, and then wound to obtain a jelly roll, and a tab was welded onto the jelly roll. The jelly roll was put into an aluminum shell, which was baked at 80°C to remove moisture, then injected with an electrolyte solution and sealed to produce an uncharged battery. The uncharged battery underwent the procedures of standing, hot/cold pressing, formation, shaping, capacity testing and so on in turn to produce a sodium metal battery product without a negative electrode.

Preparation of a full battery with a metal negative electrode: The foregoing current collector was put into a physical vapor deposition device, and a sodium metal phase was pre-deposited on the current collector by ion sputtering to obtain a metal negative electrode plate. The positive electrode plate, the separator, and the metal negative electrode plate are stacked in sequence, with the separator positioned between the positive electrode plate and the metal negative electrode plate for separation, and then wound to obtain a jelly roll, and a tab was welded to the jelly roll. The jelly roll was put into an aluminum shell, which was baked at 80°C to remove moisture, then injected with an electrolyte solution and sealed to produce an uncharged battery. The uncharged battery underwent the procedures of standing, hot/cold pressing, formation, shaping, capacity testing, and so on in turn to produce a sodium metal battery product.

### (6) Preparation of button sodium battery

Preparation of a button sodium battery without a negative electrode: The current collector, the separator, and the sodium plate were stacked in sequence, with the separator positioned between the negative electrode current collector and the sodium plate for separation, then an electrolyte solution was injected, the opening was sealed, and the button battery was assembled.

Preparation of a button sodium battery with a metal negative electrode: The foregoing current collector was put into a physical vapor deposition device, and a sodium metal phase was pre-deposited on the current collector by ion sputtering to obtain a metal negative electrode plate. The metal negative electrode plate, the separator, and the sodium plate were stacked in sequence, with the separator positioned between the metal negative electrode plate and the sodium plate for separation, then the electrolyte solution is injected, the opening is sealed, and a button cell was assembled.

### Examples 2 to 7

The batteries of Examples 2 to 7 were prepared in a similar way to that of Example 1, but the thickness of the interface protection layer was adjusted, and the specific parameters were shown in Table 1.

The battery in Example 8 was prepared in a similar way to that of the battery in Example 1, but the preparation method of the surface coating of the current collector was adjusted, and the preparation method was as follows:

5 g of carboxymethyl cellulose (CMC) were weighted and fully dissolved in deionized water with stirring. Then, 5 g of single-walled carbon nanotubes were added to prepare a slurry after ultrasonic dispersion. Subsequently, the slurry was applied onto a surface of a copper foil, and then the copper foil was transferred to a vacuum drying oven for thorough drying, resulting in a current collector with an induced deposition layer.

5 g of CMC were weighted and fully dissolved into deionized water with stirring to ensure complete dissolution of CMC. Then, the solution was applied on a surface of the induced deposition layer of the current collector with the induced deposition layer, and the current collector was transferred to a vacuum drying oven for thorough drying, resulting in a current collector with an interface protection layer and an induced deposition layer.

### Examples 9 to 14

The batteries of Examples 9 to 14 were prepared in a similar way to that of Example 8, but the thickness of the interface protection layer was adjusted, and the specific parameters were shown in Table 1.

### Examples 15 to 20

The batteries of Examples 15 to 20 were prepared in a similar way to that of Example 8, but the thickness of the induced deposition layer was adjusted, and the specific parameters were shown in Table 1.

### Examples 21 to 24

The batteries of Examples 21 to 24 were prepared in a similar way to that of Example 8, but the components of the induced deposition layer were adjusted, and the specific parameters were shown in Table 1.

### Examples 25 to 31

The batteries of Examples 25 to 31 were prepared in a similar way to that of Example 8, but the percentage of the NaDFOB additive in the electrolyte solution was adjusted, and the specific parameters were shown in Table 1.

### Examples 32 to 35

The batteries of Examples 32 to 35 were prepared in a similar way to that of Example 8, but the components of the interface protection layer were adjusted, and the specific parameters were shown in Table 1.

### Example 36

The battery of Example 36 was prepared in a similar way to that of Example 8, but the binder in the induced deposition layer was adjusted to polyvinylidene fluoride, and the specific parameters were shown in Table 1.

### Example 37

The battery of Example 37 was prepared in a similar way to that of Example 36, but the binder in the interface protection layer was adjusted to polyvinylidene fluoride, and the specific parameters were shown in Table 1.

### Example 38

The battery of Example 38 was prepared in a similar way to that of Example 8, but the type of the additive in the electrolyte solution was adjusted, and the specific parameters were shown in Table 1.

### Examples 39 to 41

The batteries of Examples 39 to 41 were prepared in a similar way to that of Example 8, but the types of solvents in the electrolyte solution were adjusted, and the specific parameters were shown in Table 1.

### Example 42

The battery of Example 42 was prepared in a similar way to that of Example 1, but a metal phase was pre-deposited between the current collector and the interface protection layer, and the specific parameters were shown in Table 1.

### Comparative Example 1

The battery of Comparative Example 1 was prepared in a similar way to that of Example 1, but the surface of the current collector was not provided with an interface protection layer, and the specific parameters were shown in Table 1.

### Comparative Example 2

The battery of Comparative Example 2 was prepared in a similar way to that of Comparative Example 1, but no additive was added to the electrolyte solution, and the specific parameters were shown in Table 1.

### Comparative Example 3

The battery of Comparative Example 3 was prepared in a similar way to that of Comparative Example 2, but only an induced deposition layer is provided on surface of the current collector, and the specific parameters were shown in Table 1.

### Comparative Example 4

The preparation method of the battery of Comparative Example 4 was similar to that of Example 42, but no interface protection layer is provided on the surface, and the specific parameters were shown in Table 1.

### II. Performance testing

### 1. Battery performance testing

### (1) Overpotential testing

The overpotential testing process was as follows: At 25°C, the prepared button sodium battery with a negative electrode current collector was discharged to 1 mAh at a constant current of 2 mA/cm², and the most negative potential obtained in the process was recorded as overpotential. The testing procedures of the comparative examples and other examples are the same as above.

### (2) Initial coulombic efficiency testing

The process of the initial coulombic efficiency testing is as follows: At 25°C, the prepared full battery was charged to 3.7 V at a constant current of 1/3C, then charged at a constant voltage of 3.7 V until the current dropped to 0.05C to obtain the initial charge capacity (Cc1), and then discharged to 2.5 V at a constant current of 1/3C to obtain the initial discharge capacity (Cd1), and the coulombic efficiency of the battery was calculated according to the following formula:

Coulombic efficiency = Initial discharge capacity (Cd1)/initial charge capacity (Cc1) × 100%. The testing procedures of the comparative examples and other examples are the same as above.

### (3) Battery cycling capacity retention rate testing

The battery capacity retention rate testing process was as follows: at 25°C, the prepared full battery was charged to 3.7 V at a constant current of 1C, then charged at a constant voltage of 3.7 V until the current dropped to 0.05C, and then discharged to 2.5 V at 1C, and the obtained capacity was recorded as the initial capacity (C0). The preceding steps were repeated for the same battery and the discharge capacity (Cn) of the battery after the n-th cycle was recorded, then the battery capacity retention rate after each cycle was calculated according to Pn=Cn/C0× 100%. A graph of the battery capacity retention rate against the number of cycles was plotted with values of 100 points of P1, P2, ..., P100 as the ordinate and the corresponding numbers of cycles as the abscissa. During this testing process, the initial cycle was n=1, the second cycle was n=2, ..., and the 100th cycle was n=100. The battery capacity retention rate data corresponding to the examples or comparative examples in Table 2 was the data measured after 100 cycles under the above test conditions, that is, the value of P100. The testing procedures of the comparative examples and other examples are the same as above.

### III. Analysis of testing results of examples and comparative examples

Batteries in the examples and comparative examples were prepared according to the foregoing methods, and performance parameters were measured. Results were shown in Table 1 and Table 2.

**Table 1**

| No. | Negative electrode current collector | | | | | | Electrolyte | | |
|---|---|---|---|---|---|---|---|---|---|
| | Induced deposition layer | | | Interface protection layer | | Whether sodium metal phase is deposited on surface of negative electrode current collector | Electrolyte solution | Additive in electrolyte | Additive percentage in electrolyte (%) |
| | Material | Thickness (nm) | Binder | Component | Thickness (nm) | | | | |
| Example 1 | / | / | / | Carboxymethyl cellulose | 100 | No | Ethylene glycol dimethyl ether | Sodium difluorooxalatoborate | 0.25 |
| Example 2 | / | / | / | Carboxymethyl cellulose | 5 | No | Ethylene glycol dimethyl ether | Sodium difluorooxalatoborate | 0.25 |
| Example 3 | / | / | / | Carboxymethyl cellulose | 15 | No | Ethylene glycol dimethyl ether | Sodium difluorooxalatoborate | 0.25 |
| Example 4 | / | / | / | Carboxymethyl cellulose | 50 | No | Ethylene glycol dimethyl ether | Sodium difluorooxalatoborate | 0.25 |
| Example 5 | / | / | / | Carboxymethyl cellulose | 500 | No | Ethylene glycol dimethyl ether | Sodium difluorooxalatoborate | 0.25 |
| Example 6 | / | / | / | Carboxymethyl cellulose | 1500 | No | Ethylene glycol dimethyl ether | Sodium difluorooxalatoborate | 0.25 |
| Example 7 | / | / | / | Carboxymethyl cellulose | 2000 | No | Ethylene glycol dimethyl ether | Sodium difluorooxalatoborate | 0.25 |
| Example 8 | Carbon nanotube | 500 | CMC | Carboxymethyl cellulose | 100 | No | Ethylene glycol dimethyl ether | Sodium difluorooxalatoborate | 0.25 |
| Example 9 | Carbon nanotube | 500 | CMC | Carboxymethyl cellulose | 5 | No | Ethylene glycol dimethyl ether | Sodium difluorooxalatoborate | 0.25 |
| Example 10 | Carbon nanotube | 500 | CMC | Carboxymethyl cellulose | 15 | No | Ethylene glycol dimethyl ether | Sodium difluorooxalatoborate | 0.25 |
| Example 11 | Carbon nanotube | 500 | CMC | Carboxymethyl cellulose | 50 | No | Ethylene glycol dimethyl ether | Sodium difluorooxalatoborate | 0.25 |
| Example 12 | Carbon nanotube | 500 | CMC | Carboxymethyl cellulose | 500 | No | Ethylene glycol dimethyl ether | Sodium difluorooxalatoborate | 0.25 |
| Example 13 | Carbon nanotube | 500 | CMC | Carboxymethyl cellulose | 1500 | No | Ethylene glycol dimethyl ether | Sodium difluorooxalatoborate | 0.25 |
| Example 14 | Carbon nanotube | 500 | CMC | Carboxymethyl cellulose | 2000 | No | Ethylene glycol dimethyl ether | Sodium difluorooxalatoborate | 0.25 |
| Example 15 | Carbon nanotube | 30 | CMC | Carboxymethyl cellulose | 100 | No | Ethylene glycol dimethyl ether | Sodium difluorooxalatoborate | 0.25 |
| Example 16 | Carbon nanotube | 50 | CMC | Carboxymethyl cellulose | 100 | No | Ethylene glycol dimethyl ether | Sodium difluorooxalatoborate | 0.25 |
| Example 17 | Carbon nanotube | 200 | CMC | Carboxymethyl cellulose | 100 | No | Ethylene glycol dimethyl ether | Sodium difluorooxalatoborate | 0.25 |
| Example 18 | Carbon nanotube | 1000 | CMC | Carboxymethyl cellulose | 100 | No | Ethylene glycol dimethyl ether | Sodium difluorooxalatoborate | 0.25 |
| Example 19 | Carbon nanotube | 2000 | CMC | Carboxymethyl cellulose | 100 | No | Ethylene glycol dimethyl ether | Sodium difluorooxalatoborate | 0.25 |
| Example 20 | Carbon nanotube | 3000 | CMC | Carboxymethyl cellulose | 100 | No | Ethylene glycol dimethyl ether | Sodium difluorooxalatoborate | 0.25 |
| Example 21 | Super P | 1000 | CMC | Carboxymethyl cellulose | 100 | No | Ethylene glycol dimethyl ether | Sodium difluorooxalatoborate | 0.25 |
| Example 22 | Graphene | 500 | CMC | Carboxymethyl cellulose | 100 | No | Ethylene glycol dimethyl ether | Sodium difluorooxalatoborate | 0.25 |
| Example 23 | Metallic silver | 500 | CMC | Carboxymethyl cellulose | 100 | No | Ethylene glycol dimethyl ether | Sodium difluorooxalatoborate | 0.25 |
| Example 24 | Super P+carbon nanotube | 500 | CMC | Carboxymethyl cellulose | 100 | No | Ethylene glycol dimethyl ether | Sodium difluorooxalatoborate | 0.25 |
| Example 25 | Carbon nanotube | 500 | CMC | Carboxymethyl cellulose | 100 | No | Ethylene glycol dimethyl ether | Sodium difluorooxalatoborate | 0 |
| Example 26 | Carbon nanotube | 500 | CMC | Carboxymethyl cellulose | 100 | No | Ethylene glycol dimethyl ether | Sodium difluorooxalatoborate | 0.01 |
| Example 27 | Carbon nanotube | 500 | CMC | Carboxymethyl cellulose | 100 | No | Ethylene glycol dimethyl ether | Sodium difluorooxalatoborate | 0.1 |
| Example 28 | Carbon nanotube | 500 | CMC | Carboxymethyl cellulose | 100 | No | Ethylene glycol dimethyl ether | Sodium difluorooxalatoborate | 0.5 |
| Example 29 | Carbon nanotube | 500 | CMC | Carboxymethyl cellulose | 100 | No | Ethylene glycol dimethyl ether | Sodium difluorooxalatoborate | 1.0 |
| Example 30 | Carbon nanotube | 500 | CMC | Carboxymethyl cellulose | 100 | No | Ethylene glycol dimethyl ether | Sodium difluorooxalatoborate | 1.8 |
| Example 31 | Carbon nanotube | 500 | CMC | Carboxymethyl cellulose | 100 | No | Ethylene glycol dimethyl ether | Sodium difluorooxalatoborate | 2 |
| Example 32 | Carbon nanotube | 500 | CMC | Polyacrylic acid | 100 | No | Ethylene glycol dimethyl ether | Sodium difluorooxalatoborate | 0.25 |
| Example 33 | Carbon nanotube | 500 | CMC | Polyvinylidene fluoride | 100 | No | Ethylene glycol dimethyl ether | Sodium difluorooxalatoborate | 0.25 |
| Example 34 | Carbon nanotube | 500 | CMC | Syrene-propylene-butadiene | 100 | No | Ethylene glycol dimethyl ether | Sodium difluorooxalatoborate | 0.25 |
| Example 35 | Carbon nanotube | 500 | CMC | Polyimide | 100 | No | Ethylene glycol dimethyl ether | Sodium difluorooxalatoborate | 0.25 |
| Example 36 | Carbon nanotube | 500 | PVDF | Carboxymethyl cellulose | 100 | No | Ethylene glycol dimethyl ether | Sodium difluorooxalatoborate | 0.25 |
| Example 37 | Carbon nanotube | 500 | PVDF | Polyvinylidene fluoride | 100 | No | Ethylene glycol dimethyl ether | Sodium difluorooxalatoborate | 0.25 |
| Example 38 | Carbon nanotube | 500 | CMC | Carboxymethyl cellulose | 100 | No | Ethylene glycol dimethyl ether | Sodium bisoxalate borate | 0.25 |
| Example 39 | Carbon nanotube | 500 | CMC | Carboxymethyl cellulose | 100 | No | Ethylene glycol diethyl ether | Sodium difluorooxalatoborate | 0.25 |
| Example 40 | Carbon nanotube | 500 | CMC | Carboxymethyl cellulose | 100 | No | Ethylene glycol dimethyl ether | Sodium difluorooxalatoborate | 0.25 |
| Example 41 | Carbon nanotube | 500 | CMC | Carboxymethyl cellulose | 100 | No | Tetrahydrofuran | Sodium difluorooxalatoborate | 0.25 |
| Example 42 | / | / | / | Carboxymethyl cellulose | 100 | Yes | Ethylene glycol dimethyl ether | Sodium difluorooxalatoborate | 0.25 |
| Comparative Example 1 | / | / | / | / | / | No | Ethylene glycol dimethyl ether | Sodium difluorooxalatoborate | 0.25 |
| Comparative Example 2 | / | / | / | / | / | No | Ethylene glycol dimethyl ether | / | / |
| Comparative Example 3 | Carbon nanotube | 500 | CMC | / | / | No | Ethylene glycol dimethyl ether | Sodium difluorooxalatoborate | 0.25 |
| Comparative Example 4 | / | / | / | / | / | Yes | Ethylene glycol dimethyl ether | Sodium difluorooxalatoborate | 0.25 |

**Table 2**

| No. | Battery | | |
|---|---|---|---|
| | Nucleation overpotential (mV) | Coulombic efficiency (%) | Capacity retention rate after 100 cycles (%) |
| Example 1 | 226 | 76.1 | 74.5 |
| Example 2 | 128 | 55.7 | 39.8 |
| Example 3 | 132 | 73.6 | 63.9 |
| Example 4 | 145 | 75.3 | 72.1 |
| Example 5 | 255 | 72.1 | 68.9 |
| Example 6 | 330 | 70.7 | 61.4 |
| Example 7 | 393 | 61.4 | 48.6 |
| Example 8 | 15 | 95.5 | 98.3 |
| Example 9 | 16 | 62.1 | 47.6 |
| Example 10 | 16 | 92 | 87.5 |
| Example 11 | 18 | 94.4 | 94.8 |
| Example 12 | 93 | 94.7 | 92.3 |
| Example 13 | 118 | 92.6 | 85.2 |
| Example 14 | 285 | 72.6 | 55.1 |
| Example 15 | 75 | 73.5 | 66.2 |
| Example 16 | 40 | 93.1 | 90.8 |
| Example 17 | 18 | 94.3 | 95.2 |
| Example 18 | 31 | 94 | 96.1 |
| Example 19 | 37 | 92.8 | 91.3 |
| Example 20 | 188 | 82.4 | 71.5 |
| Example 21 | 48 | 93.6 | 94.8 |
| Example 22 | 22 | 95.1 | 97.3 |
| Example 23 | 52 | 91.5 | 93.4 |
| Example 24 | 19 | 95.2 | 98 |
| Example 25 | 15 | 81.5 | 75.2 |
| Example 26 | 15 | 83.7 | 79.4 |
| Example 27 | 15 | 93.3 | 97.7 |
| Example 28 | 15 | 93.4 | 97.5 |
| Example 29 | 15 | 91.4 | 92.9 |
| Example 30 | 15 | 78.4 | 79.9 |
| Example 31 | 15 | 61.2 | 62.7 |
| Example 32 | 97 | 94.3 | 96.4 |
| Example 33 | 63 | 94.7 | 95.1 |
| Example 34 | 108 | 92.6 | 93.3 |
| Example 35 | 90 | 91.8 | 93.1 |
| Example 36 | 66 | 90.5 | 91.4 |
| Example 37 | 23 | 93.2 | 94.4 |
| Example 38 | 15 | 92.8 | 95.3 |
| Example 39 | 15 | 94.9 | 97.8 |
| Example 40 | 15 | 95.2 | 98 |
| Example 41 | 15 | 86.5 | 85.3 |
| Example 42 | 226 | 76.1 | 74.5 |
| Comparative Example 1 | 179 | 55.2 | 23.3 |
| Comparative Example 2 | 179 | 43.7 | 5.4 |
| Comparative Example 3 | 16 | 56.1 | 34.5 |
| Comparative Example 4 | 179 | 51.7 | 45.4 |

According to the above results, the coatings of Examples 1 to 42 were formed on at least one side of the current collector and included an interface protection layer. From the comparison of Examples 1 to 41 and Comparative Example 1 and the comparison of Example 42 and Comparative Example 4, it can be seen that an interface protection layer is formed on one side of the current collector of copper foil as a coating. This can reduce contact between a sodium metal and an electrolyte solution, help reduce side reactions between the sodium metal and the electrolyte solution, and effectively improve the coulombic efficiency and capacity retention rate after 100 cycles of the battery.

From the comparison of Examples 8 to 14 with Examples 1 to 7, it can be seen that compared with the coating only including the interface protection layer of carboxymethyl cellulose (CMC), the coating in Examples 8 to 14 further included the carbon nanotube induced deposition layer, and the carbon nanotube induced deposition layer was located between the current collector of copper foil and the interface protection layer of carboxymethyl cellulose (CMC), which is more conducive to reducing the nucleation overpotential of sodium ions, further improving the coulombic efficiency and capacity retention rate after 100 cycles of the battery. The nucleation overpotential of sodium ions decreased by more than 90% (decrease = (minimum nucleation overpotential in Examples 1 to 7 - maximum nucleation overpotential in Examples 8 to 14)/(minimum nucleation overpotential in Examples 1 to 7) × 100%), and this algorithm also applies to the following), and the coulombic efficiency and capacity retention rate after 100 cycles increased by more than 20% (using an algorithm of the increase of the coulombic efficiency as an example, increase = (minimum coulombic efficiency in Examples 8 to 14 - maximum coulombic efficiency in Examples 1 to 7)/(minimum coulombic efficiency in Examples 1 to 7) × 100%, the algorithm for the increase of the capacity retention rate after 100 cycles is the same as the algorithm for the increase of the coulombic efficiency). This greatly improves the cycling performance and safety of the battery.

From the comparison of Examples 1, 3 to 6 with Examples 2 and 7 and comparison of Examples 8, 10 to 13 with Examples 9 and 14, it can be seen that the thickness of the interface protection layer of carboxymethyl cellulose (CMC) controlled to be within 15 nm to 1500 nm is beneficial to improve the coulombic efficiency and the capacity retention rate after 100 cycles of the battery or reduce the nucleation overpotential of sodium ions. From the comparison of Examples 1, 4, and 5 with Examples 3 and 6, and comparison of Examples 8, 11, and 12 with Examples 10 and 13, it can be seen that the thickness of the interface protection layer of carboxymethyl cellulose (CMC) controlled to be within 50 nm to 500 nm is beneficial to further improve the coulombic efficiency and the capacity retention rate after 100 cycles of the battery or reduce the nucleation overpotential of sodium ions to a greater extent.

From the comparison of Examples 8, and 16 to 19 with Examples 15 and 20, it can be seen that the thickness of the induced deposition layer of carbon nanotubes controlled to be within 50 nm to 2000 nm can provide enough nucleation sites, which helps to reduce the nucleation overpotential of sodium ions and improve the coulombic efficiency and capacity retention rate after 100 cycles of the battery, with the overpotential of the sodium ions decreasing by more than 46%. From the comparison of Examples 8, 17, and 18 with Examples 16 and 19, it can be seen that the thickness of the induced deposition layer of carbon nanotubes controlled to be within 200 nm to 1000 nm is beneficial to reduce the nucleation overpotential of sodium ions to a greater extent and further improve the coulombic efficiency and capacity retention rate after 100 cycles of the battery.

From the comparison of Examples 8, and 21 to 24 with Comparative Example 1, it can be seen that the induced deposition layer including carbon nanotubes, Super P, graphene, metallic silver, or a mixture of Super P and carbon nanotubes can effectively reduce the nucleation overpotential of sodium ions and improve the coulombic efficiency and capacity retention rate after 100 cycles of the battery. From the comparison of Examples 8, 21, 22, and 24 with Example 23, it can be seen that compared with the induced deposition layer including only a metal material, the induced deposition layer including a carbon material has a lower nucleation overpotential of sodium ions and higher coulombic efficiency and capacity retention rate after 100 cycles of the battery. From the comparison of Examples 8 and 24 with Example 22, it can be seen that compared with the induced deposition layer of graphene, the induced deposition layer of carbon nanotubes or of a mixture of Super P and carbon nanotubes can further reduce the nucleation overpotential of sodium ions and greatly improve the coulombic efficiency and capacity retention rate after 100 cycles of the battery.

From the comparison of Examples 8, 21 to 24 with Comparative Example 1, it can be seen that the induced deposition layer including carbon nanotubes, Super P, graphene, metallic silver, or a mixture of Super P and carbon nanotubes, combined with the electrolyte solution including the sodium difluorooxalatoborate (NaDFOB) additive is beneficial to further improve the coulombic efficiency and capacity retention rate after 100 cycles of the battery.

From the comparison of Examples 8, 26 to 30 with Examples 25 and 31, it can be seen that the mass percentage of the sodium difluorooxalatoborate (NaDFOB) additive in the electrolyte solution controlled to be within 0.01% to 1.8% based on the total mass of the electrolyte solution is beneficial to improve the capacity retention rate after 100 cycles of the battery. From the comparison of Examples 8, 27, and 28 with Examples 26 and 30, it can be seen that the mass percentage of the sodium difluorooxalatoborate (NaDFOB) additive in the electrolyte solution controlled to be within 0.1% to 1.0% based on the total mass of the electrolyte solution can further improve the coulombic efficiency and capacity retention rate after 100 cycles of the battery.

From the comparison of Examples 8, 32 to 35 with Comparative Example 3, it can be seen that the interface protection layer includes carboxymethyl cellulose (CMC), polyacrylic acid (AA), polyvinylidene fluoride (PVDF), styrene-propylene-butadiene (SBR), or polyimide (PI), which is beneficial to improve the coulombic efficiency and capacity retention rate after 100 cycles of the battery. Both the coulombic efficiency and capacity retention rate after 100 cycles of the battery exceed 63%. From the comparison of Examples 8 and 33 with Examples 32, 34, and 35, it can be seen that compared with the interface protection layer including polyacrylic acid (AA), styrene-propylene-butadiene (SBR) or polyimide (PI), the interface protection layer including carboxymethyl cellulose (CMC) or polyvinylidene fluoride (PVDF) can greatly reduce the nucleation overpotential of sodium ions and further improve the capacity retention rate after 100 cycles of the battery.

From comparison of Example 8 with Examples 32 to 35 and of Example 37 with Example 36, it can be seen that the material of the interface protection layer and the binder material in the induced deposition layer controlled to be at least partially the same is beneficial to reduce the nucleation overpotential of sodium ions and improve the coulombic efficiency and capacity retention rate after 100 cycles the battery.

From the comparison of Examples 8 and 38 with Example 25, it can be seen that the electrolyte solution including sodium difluorooxalatoborate or sodium bisoxalate borate is beneficial to improve the coulombic efficiency and capacity retention rate after 100 cycles of the battery. From the comparison of Example 8 with Example 38, it can be seen that compared with the electrolyte solution including sodium bisoxalate borate, the electrolyte solution including sodium difluorooxalatoborate provides a higher coulombic efficiency and capacity retention rate after 100 cycles of the battery.

From the comparison of Examples 8, 39 to 41 with Comparative Example 3, it can be seen that the electrolyte solution including ethylene glycol dimethyl ether, ethylene glycol diethyl ether, diethylene glycol dimethyl ether, or tetrahydrofuran is beneficial to reduce the overpotential of sodium ions and improve the coulombic efficiency and capacity retention rate after 100 cycles of the battery. From the comparison of Examples 8, 39, and 40 with Example 41, it can be seen that compared with the electrolyte solution including tetrahydrofuran, the electrolyte solution including ethylene glycol dimethyl ether, ethylene glycol diethyl ether, or diethylene glycol dimethyl ether is beneficial to further improve the coulombic efficiency and capacity retention rate after 100 cycles of the battery.

It should be noted that this application is not limited to the foregoing embodiments. The foregoing embodiments are merely examples, and embodiments having substantially the same constructions and the same effects as the technical idea within the scope of the technical solutions of this application are all included in the technical scope of this application. In addition, without departing from the essence of this application, various modifications made to the embodiments that can be conceived by persons skilled in the art, and other manners constructed by combining some of the constituent elements in the embodiments are also included in the scope of this application.

## Claims

1. A current collector with a coating, **characterized in that** the coating comprises at least an interface protection layer, and that the coating is formed on at least one side of the current collector.

2. The current collector according to claim 1, **characterized in that** the coating further comprises an induced deposition layer, and that the induced deposition layer and the interface protection layer are sequentially arranged in a direction from close to the current collector to away from the current collector.

3. The current collector according to claim 2, **characterized in that** the induced deposition layer is in direct contact with surface of the current collector.

4. The current collector according to claim 2 or 3, **characterized in that** the interface protection layer is in direct contact with surface of the induced deposition layer.

5. The current collector according to any one of claims 1 to 4, **characterized in that** the interface protection layer comprises one or more of polyvinylidene fluoride, carboxymethyl cellulose, styrene-propylene-butadiene copolymer, polyacrylic acid, and polyimide, optionally one or more of polyvinylidene fluoride and carboxymethyl cellulose.

6. The current collector according to any one of claims 1 to 5, **characterized in that** the interface protection layer has a thickness of 15 nm to 1500 nm, optionally 50 nm to 500 nm.

7. The current collector according to any one of claims 2 to 6, **characterized in that** the induced deposition layer comprises a conductive material, the conductive material comprising a carbon material and/or a metal material.

8. The current collector according to any one of claims 2 to 7, **characterized in that** the conductive material comprises one or more of superconductive carbon black, carbon nanotubes, hard carbon, two-dimensional graphene, graphene quantum dots, gold, silver, copper, aluminum, iron, and nickel, optionally one or more of Super P, carbon nanotubes, hard carbon, two-dimensional graphene, and graphene quantum dots.

9. The current collector according to any one of claims 2 to 8, **characterized in that** the thickness of the induced deposition layer is 50 nm to 2000 nm, optionally 200 nm to 1000 nm.

10. The current collector according to any one of claims 2 to 9, **characterized in that** the induced deposition layer further comprises a binder, the binder comprising one or more selected from polyvinylidene fluoride, carboxymethyl cellulose, styrene-propylene-butadiene copolymer, polyacrylic acid, and sodium alginate.

11. The current collector according to any one of claims 2 to 10, **characterized in that** the binder material in the induced deposition layer is at least partially the same as a material of the interface protection layer.

12. The current collector according to any one of claims 1 to 11, **characterized in that** the current collector comprises at least one of a metal foil, a metal foam current collector, a metal mesh current collector, a carbon felt current collector, a carbon fiber cloth current collector, a carbon paper current collector, and a composite current collector.

13. A secondary battery, **characterized by** comprising an electrolyte solution and a negative electrode plate, wherein the negative electrode plate comprises the current collector according to any one of claims 1 to 12.

14. The secondary battery according to claim 13, **characterized in that** the secondary battery comprises at least one of a lithium battery and a sodium battery.

15. The secondary battery according to claim 13 or 14, **characterized in that** the secondary battery is a sodium battery without a negative electrode.

16. The secondary battery according to any one of claims 13 to 15, **characterized in that** the electrolyte solution comprises an ether solvent, wherein the ether solvent comprises one or more of ethylene glycol dimethyl ether, ethylene glycol diethyl ether, diethylene glycol dimethyl ether, triethylene glycol dimethyl ether, tetraethylene glycol dimethyl ether, 1,3- dioxolane, tetrahydrofuran, methyl tetrahydrofuran, diphenyl ether, and crown ether, optionally one or more of ethylene glycol dimethyl ether, ethylene glycol diethyl ether, and diethylene glycol dimethyl ether.

17. The secondary battery according to any one of claims 13 to 16, **characterized in that** the electrolyte solution further comprises a sodium borate additive.

18. The secondary battery according to claim 17, **characterized in that** the sodium borate additive comprises one or more of sodium difluorooxalatoborate and sodium bisoxalate borate, optionally sodium difluorooxalatoborate.

19. The secondary battery according to claim 17 or 18, **characterized in that** a mass percentage of the sodium borate additive is 0.01% to 1.8%, optionally 0.1% to 1.0% based on a total mass of the electrolyte solution.

20. A battery module, **characterized by** comprising the secondary battery according to any one of claims 13 to 19.

21. A battery pack, **characterized by** comprising the secondary battery according to any one of claims 13 to 19 or the battery module according to claim 20.

22. An electric apparatus, **characterized by** comprising at least one of the secondary battery according to any one of claims 13 to 19, the battery module according to claim 20, and the battery pack according to claim 21.
